# FASCICULE DE BREVET EUROPEEN

(11) **EP 0 509 930 B1**
(45) Date de publication et mention de la délivrance du brevet: **09.03.1994**
(21) Numéro de dépôt: 92401076.2
(22) Date de dépôt: 17.04.1992
(51) Int. Cl.: A61K 7/16, A23K 1/18

(54) **Compositions hygiéniques destinées aux animaux domestiques**
Hygienezusammensetzungen für Haustiere
Hygiene compositions for domestic animals

(30) Priorité: 17.04.1991 FR 9104662
(43) Date de publication de la demande: 21.10.1992
(73) Titulaire: LABORATOIRES VETERINAIRES CANY'S, 94000 Créteil (FR)
(72) Inventeur: Lacroix, Georges, Monaco (FR); Clamou, Jean-Luc, Nice (FR); Morelle, Jean, Paris (FR); Lauzanne-Morelle, Eliane, Paris (FR)
(74) Mandataire: Lachassagne, Jacques

(56) Documents cités:
- EP-A- 0 233 429
- EP-A- 0 272 968
- CH-A- 676 200
- US-A- 4 260 635
- WORLD PATENTS INDEX LATEST Section Ch, Week 8912, Derwent Publications Ltd., London, GB; Class D, AN 89-091239
- PATENT ABSTRACTS OF JAPAN vol. 12, no. 110 (C-486)8 Avril 1988
- PATENT ABSTRACTS OF JAPAN vol. 12, no. 75 (C-480)9 Mars 1988
- WORLD PATENTS INDEX LATEST Section Ch, Week 8309, Derwent Publications Ltd., London, GB; Class A, AN 83-21734K
- WORLD PATENTS INDEX LATEST Section Ch, Week 9005, Derwent Publications Ltd., London, GB; Class A, AN 90-111924
- STOMATOLOGIE DER DDR vol. 36, no. 12, Décembre 1986, pages 677 - 681; D. NEUMANN ET AL.: 'Klinische Studie zur Untersuchung der Plaque- und Gingivitishemmung durch Propolis'

## Description

La présente invention concerne des compositions hygiéniques destinées aux animaux domestiques.

Il est bien connu que les animaux domestiques, en particulier les chats et les chiens, émettent des odeurs buccales désagréables, dues, dans la plupart des cas, à la dégradation protéinique provoquée par les enzymes protéolytiques d'origines diverses ; cette dégradation affecte essentiellement les muqueuses buccales mais peut également affecter la dentition. Jusqu'ici, pour lutter contre ces odeurs, on donnait, à l'animal, des comprimés de chlorophylle et d'antimicrobiens de synthèse ou de culture qui étaient additionnés à sa nourriture, ces substances étant déjà utilisées à cette fin en thérapeutique humaine ; pour lutter contre la dégradation dentaire, on ajoutait généralement des produits fluorés à la nourriture.

Toutefois de tels traitements sont peu efficaces en raison de la dilution des principes actifs dans la nourriture et de leur faible durée de séjour dans la cavité buccale. Si, pour compenser la dilution et augmenter le temps de contact, on augmente les doses de principes actifs (chlorophylle et antimicrobiens de synthèse ou de culture) cela conduit à des dérangements gastro-intestinaux. En outre, il a maintenant été démontré que les chiens et les chats ne développent qu'exceptionellement des caries et que l'administration de produits fluorés était, en fait, inutile.

Il était donc important de proposer, à ce problème, des solutions mieux adaptées et plus satisfaisantes.

La présente invention a pour objet la réalisation de compositions assimilables par l'animal, caractérisées en ce qu'elles comportent un support, dont la forme et les caractéristiques organoleptiques suggèrent l'alimentation usuelle de l'animal (os, morceau de viande, par exemple), contenant de la chlorophylle associée à un inhibiteur d'enzymes protéolytiques et à un antimicrobien naturel.

Le support sera consituté de protéines animales agglomérées et comprimées, telles la poudre d'os, la poudre de sang, fragments de peaux d'animaux variés.

Selon l'invention, le support aux qualités nutritionnelles sera mélangé, avant compression et moulage, à 3 à 10 %, en poids, de chlorophylle, à 1 à 3 %, en poids, d'un inhibiteur d'enzymes protéolytiques tel que l'acétylcollagène qui présente la propriété d'inhiber l'action de la collagénase dont l'activité collagénolytique a été démontrée par V. UITTO, K. TRYGGUASON et T. SORSA (Proc. fin. Dent. Soc. 1987 83 119-129) et, comme produit antimicrobien, à 1 à 5 %, en poids, d'un extrait délipidé de propolis, substance sécrétée par les abeilles.

On connaît déjà des produits similaires destinés à l'entretien de la denture des chiens, en particulier, la demande de brevet européen No. 0 272 968 décrit des supports dont la nature est en elle-même connue, auquelle on associe des sels fluorés, des agents antimicrobiens de synthèse et un agent anti-tartre de synthèse. Toutefois, il s'est avéré que les sels fluorés étaient sans intérêt en ce qui concerne les animaux et que, à titre d'agents antimicrobiens, les produits d'origine naturelle étaient largement préférables aux produits de synthèse.

L'invention sera d'ailleurs mieux comprise grâce à la description des exemples qui suivent.

### EXEMPLE 1 : Support en forme de morceaux de viande

On prépare une pâte contenant 5 kg de poudre d'os, 15 kg de poudre de sang, 75 kg de fragments de peau d'animaux débarassés de leur poil, 2,5 kg d'acétylcollagène et 1 kg de propolis. On ajoute à ces produits une solution aqueuse contenant 1,5 kg de chlorophylle. Après malaxage ce mélange est introduit dans des moules conférant à ce matériau la forme de gros dés de viande d'une taille suffisante pour imposer leur mastication; les morceaux obtenus sont mis à sécher à 60°C pendant 6 heures.

### EXEMPLE 2 : Support en forme d'os

On prépare des lamelles de peau de boeuf soigneusement débarassées de leurs poils et mises à macérer sous agitation dans un bain en enceinte fermée. Le bain comprend, pour 10 litres d'eau, 50 g de chlorophylle, 30 g d'acétylcollagène et 20 g de propolis. Après une macération de 48 heures à température ambiante, un kilo de peau a retenu, en pourcentage, entre 3 à 10 % de son poids de chlorophylle, entre 1 et 3 % de son poids en acétylcollagène et entre 1 et 5 % de son poids en propolis. Les lamelles ainsi traitées sont empilées en interposant un peu de poudre de sang et d'os et comprimées dans des formes restituant sensiblement l'apparence d'un os. Les produits ainsi obtenus sont séchés en étuve à 40°C pendant 6 heures.

Bien que l'invention ait été décrite à propos de deux formes, il va de soi que toute autre forme suffisamment attirante pour l'animal et dont la texture impose une mastication d'une certaine durée rentre également dans le cadre de cette invention.

## Revendications

1. Produit d'hygiène notamment destiné à la désodorisation buccale d'animaux domestiques caractérisé en ce qu'il est constitué d'un support protéinique assimilable, imprégné d'une substance désodorisante associée à un inhibiteur d'enzymes protéolyriques et à un antimicrobien naturel.

2. Produit d'hygiène selon la revendication 1, caractérisé en ce que le support comporte, en poids, de 3 à 10 % de chlorophylle, de 1 à 3 % d'acétylcollagène inhibiteur des enzymes protéolyriques et de 1 à 5 % de propolis sous forme d'extrait délipidé.

3. Produit d'hygiène selon l'une des revendications précédentes présenté sous une forme suggérant à l'animal son alimentation habituelle.

## Patentansprüche

1. Hygieneprodukt insbesondere zur Munddesodorisierung von Haustieren, dadurch gekennzeichnet, daß es aus einem assimilierbaren Proteinträger besteht, der mit einer desodorisierenden Substanz imprägniert ist, der ein Inhibitor für proteolytische Enzyme und ein natürlicher antimikrobieller Wirkstoff beigegeben sind.

2. Hygieneprodukt nach Anspruch 1, dadurch gekennzeichnet, das der Träger 3 bis 10 Gew.-% Chlorophyll, 1 bis 3 Gew.-% proteolytische Enzyme hemmendes Acetylcollagen und 1 bis 5 Gew.-% Propolis in Form eines von Lipiden befreiten Extrakts enthält.

3. Hygieneprodukt nach einem der vorhergehenden Ansprüche in einer Form, die das Tier an seine übliche Nahrung denken läßt.

## Claims

1. Hygienic product more particularly for buccal deodorization of domestic animals characterised in that it consists of an assimilable proteinic support, impregnated with a deodorant substance associated with an inhibitor of proteolytic enzymes and with a natural microbicid agent.

2. Hygienic product, according to claim 1, characterised in that the support comprises, by weight, from 3 to 10% of chlorophyl, from 1 to 3% of acetylcollagen, inhibitor of proteolytic enzymes and from 1 to 5% of propolis in the form of delipidated extract.

3. Hygienic product according any one of the preceding claims presented under a form which suggests the animal its usual feeding.
